# EUROPEAN PATENT SPECIFICATION

(11) **EP 2 848 801 B1**
(45) Date of publication and mention of the grant of the patent: **15.08.2018**
(21) Application number: 13184617.2
(22) Date of filing: 16.09.2013
(51) Int. Cl.: F03B 13/10, F16C 33/66, F16J 15/40

(54) **Enhanced hydroelectric plant of the submerged-turbine type and corresponding control method of said plant**
Verbessertes hydroelektrisches Unterwasserkraftwerk und ein entsprechendes Kontrollverfahren
Centrale hydroélectrique subaquatique améliorée et procédé de contrôle de cette centrale

(43) Date of publication of application: 18.03.2015
(73) Proprietor: Frendy Energy S.p.A., 50123 Firenze (IT)
(72) Inventor: Denti, Rinaldo, 6913 Lugano (CH)
(74) Representative: Botti, Mario

(56) References cited:
- WO-A2-2011/062484
- US-A- 5 683 278
- US-A1- 2011 278 851
- US-A1- 2011 293 404

## Description

### Field of application

The present invention relates, according to its more general aspect, to an enhanced hydroelectric plant of the submerged-turbine type, namely a plant comprising a turbine generator unit designed to operate in a completely immersed condition.

The invention also relates to a method for controlling and monitoring a submerged-turbine plant of the aforementioned type.

The invention may find a useful application in particular in the sector of small-scale hydroelectricity generation where the plants with submerged turbine are installed at points along irrigation channels or channelled waterways where there are small differences in level.

### Prior Art

As is known, hydroelectric power may be regarded as a source of alternative or renewable energy which normally exploits the possibility of converting the potential gravitational energy possessed by a water mass at a certain height into kinetic energy when a predetermined difference in level is exceeded. The kinetic energy is converted into electric energy in a hydroelectric power station by means of an alternator coupled to a turbine.

Historically speaking, the production of electric energy by hydroelectric power stations has played an important part in the industrial growth of many countries. More than sixty years ago, the electric energy produced in Italy was mainly, although not exclusively, hydroelectric in nature, but subsequently the production of other forms of energy, such as thermoelectric energy, expanded rapidly owing to the availability hydrocarbon and fossil sources at a relatively low cost. At present in Italy, the amount of hydroelectric energy produced is equivalent to a market share of about 15%.

In recent years, a number of laws have liberalized the energy market following the adoption of a directive issued by the European Community whereby private entities may also compete in the production of electric energy alongside the State which substantially used to have a monopoly over production and distribution.

Moreover, following the restriction of monopolistic activities, since 2003 the production of energy by private bodies and from renewable sources has enjoyed a major boom.

The above factors have given rise to a renewed interest in hydroelectric energy and the need to be able to compete in the production thereof at a low cost and with competitive prices on the market.

However, it should be remembered that most hydroelectric basins have already been exploited and are normally situated in mountainous regions far from the centres which mainly use the electric power produced, thereby resulting in the need for large infrastructures for the distribution thereof.

It is however possible to exploit also gravitational variations resulting from a smaller height and obtain electric power also from masses of flowing water subject to relatively smaller differences in level present in more densely populated zones; obviously in these cases, a given and constant water flow is however necessary.

This is the case, for example, of various irrigation channels, of an artificial or non-artificial nature, which in many European countries form an intricate water distribution network mainly for agricultural uses.

These channels may also have differences in level of only a few metres located along some sections of their path where generally erosion of the waterbed has occurred owing to the varying resistance of the surrounding terrain. Small cascades normally form in the vicinity of these changes in level.

It is already known to make use of these small differences in level in order to produce electric energy by means of small hydroelectric plants which use mostly turbines of the submerged type. The housing of these turbines which incorporates both the impeller and the alternator connected to it is fully immersed during normal operation of the plant.

It should be noted, however, that the submerged turbines available on the market for small cascades are, for the most part, simple modified hydraulic pumps; in particular devices which exploit the Archimedes' screw principle. While satisfying substantially the requirements of the sector, it must nevertheless be pointed out that the efficiency of these turbines is relatively low.

Furthermore, while they are particularly suitable for the applications described above, submerged turbines - and in particular the dedicated higher efficiency machines - nevertheless have a number of drawbacks associated mainly with the risk of seepage into the water of the oil used to lubricate the rotor or shaft support bearing.

Such oil leakages, in addition to causing substantial pollution of the flowing water, constitute a serious risk for the operation and mechanical integrity of the plant.

Similarly, another critical aspect of the installation relates to the immersion of the electric alternator. Seepage of water inside the housing chamber may in fact result in irreparable damage to this costly component and must therefore be avoided at all costs.

Document WO 2011/062484 A2 discloses a sealing structure for a marine propeller shaft that employs a pressure chamber filled with a sealing fluid. Document US 2011/0293404 A1 discloses an underwater hydroelectric turbine having an equilibrium chamber for automatically balancing lubricant pressure with ambient water pressure.

The technical problem forming the basis of the present invention is therefore that of devising a hydroelectric plant of the submerged turbine type, which improves the performances of the plants of the prior art with regard to the water-tightness of the turbine and which at the same time allows the prompt detection of any oil leakages or water infiltration.

### Summary of the invention

The aforementioned technical problem is solved by a plant for the production of hydroelectric energy, comprising: a turbine unit, designed to operate fully immersed in flowing water, comprising in turn a current generator and an impeller connected thereto by means of a shaft, said shaft being rotatably coupled to a main body of the turbine unit by means of at least one bearing; a lubrication circuit, comprising a storage reservoir for a lubricating liquid and a hydraulic supply line which establishes fluid connection between said storage reservoir and a lubrication chamber of said bearing; and a pressurization circuit, comprising a compressed-fluid source and a pneumatic supply line which connects said compressed-fluid source to a sealed chamber which surrounds the current generator, isolating it from an environment outside the turbine unit, said pneumatic supply line further connecting said compressed-fluid source to said storage reservoir, so as to allow pressurization of the lubrication circuit.

A person skilled in the art will readily understand how the pressurization circuit described above allows a fluid to be kept under pressure inside the interspace - referred to above as sealed chamber - surrounding the current generator. If this pressure is kept higher than the surrounding hydrostatic pressure, undesirable water infiltration is thus prevented.

The same pressurization circuit also keeps under pressure the oil circulating inside the lubrication circuit; it also allows any leakages or infiltration to be diagnosed promptly by simply detecting the changes in the balance between the pressures of the compressed fluid and the lubricating liquid inside the storage reservoir.

The pressurization circuit may advantageously comprise a minimum pressure sensor intended to detect an excessive drop in pressure inside said pressurization circuit.

Such a drop in pressure may be compensated where needed by introducing more compressed fluid into the system; if, however, this compensation is not sufficient, operation of the plant must be stopped.

The lubrication circuit may comprise a minimum level sensor associated with said storage reservoir, intended to detect any leakages in the lubrication circuit.

Both the minimum pressure sensor and the minimum level sensor, if present, may be operatively connected to a control unit designed to interrupt operation of the plant in response to the signals of these sensors.

The storage reservoir may also comprise a column which can be visually inspected in order to monitor the pressure balance between the compressed fluid and the lubricating liquid inside it.

In this way, the personnel supervising the plant may inspect directly and immediately the pressure balance in the system and, where necessary, confirm the alarm signals activated by the aforementioned sensor system.

The compressed-fluid source may in particular comprise a compressor, which may be associated with a pneumatic pressure reducer, connected downstream of the latter, and which supplies the pneumatic supply line.

The compressor may simply operate using atmospheric fluid, such that the fluid introduced into the pressurization plant consists of compressed air.

Said pneumatic supply line may comprise an upstream portion, which connects said compressed-fluid source to said sealed chamber and said storage reservoir, and a downstream portion, which connects said sealed chamber to a bleed valve.

The upstream portion of the pneumatic supply line may in particular comprise a first branch, which connects the compressed-fluid source to the sealed chamber, and a second branch, which connects the compressed-fluid source to the storage reservoir, said branches separately interruptible by means of a reservoir isolating valve and a sealed chamber isolating valve, respectively.

The hydraulic supply line comprise an upstream portion, which connects said storage reservoir to said lubrication chamber, and a downstream portion, which connects said lubrication chamber to a bleed valve.

In particular, said upstream portion of the hydraulic supply line is selectively interruptible by means of a lubrication chamber isolating valve.

All the valves described above may preferably take the form of manually operated gate valves.

The abovementioned technical problem is also solved by a method for controlling a plant for the production of hydroelectric energy comprising a turbine unit operating completely immersed in flowing water, where the turbine unit has a current generator and an impeller connected thereto by means of a shaft supported by at least one bearing, said method comprising the steps of:
- filling, with lubricating liquid, a lubrication chamber of said bearing, supplied by a lubrication circuit;
- pressurizing, by means of a pressurization circuit, a sealed chamber which surrounds the current generator, isolating it from an environment outside the turbine unit, until a pressure greater than the hydrostatic pressure of the water in which the turbine unit is immersed is reached;
- pressurizing said lubrication circuit, by establishing fluid communication between the pressurization circuit and the lubrication circuit.

The lubrication circuit may in particular comprise a storage reservoir connected to the lubrication chamber by means of a hydraulic supply line, said step of pressurizing the lubrication circuit envisaging in this case pressurization of the storage reservoir by connecting it to the pressurization circuit.

Said method may also comprise a step of checking the level of the lubricating liquid inside the storage reservoir, interrupting operation of the plant should said level drop below a predetermined threshold.

Said method may also comprise a step of checking the pressure of the compressed fluid inside the pressurization circuit, generating an alarm signal should said pressure drop below a predetermined threshold.

Said alarm signal may in particular cause activation of a compressor connected upstream of the pressurization circuit and thereafter, should the action of the compressor not allow restoration of the pressure beyond the predetermined threshold, switching-off of the plant.

Further characteristic features and advantages of the present invention will emerge from the following description, provided hereinbelow, of a preferred example of embodiment thereof, provided by way of a nonlimiting example, with reference to the accompanying drawings.

### Brief description of the drawings

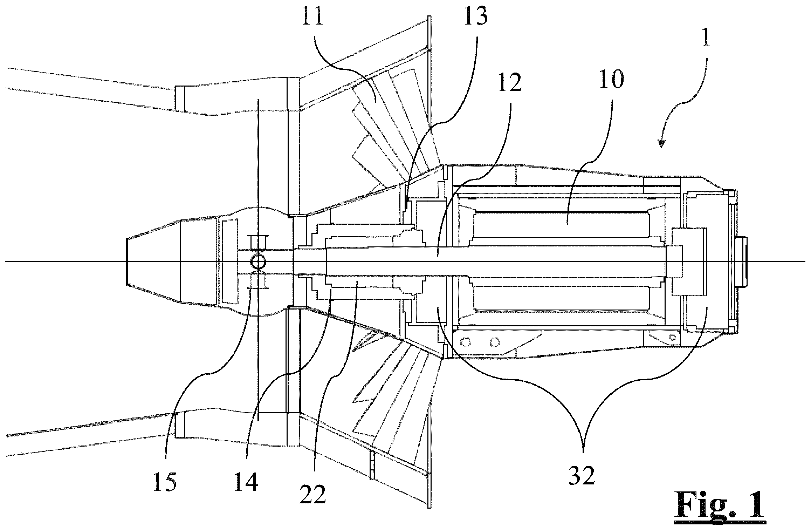

Figure 1 shows in schematic form a submerged turbine unit forming part of the plant according to the present invention;
Figure 2 shows in schematic form a plant according to the present invention.

### Detailed description

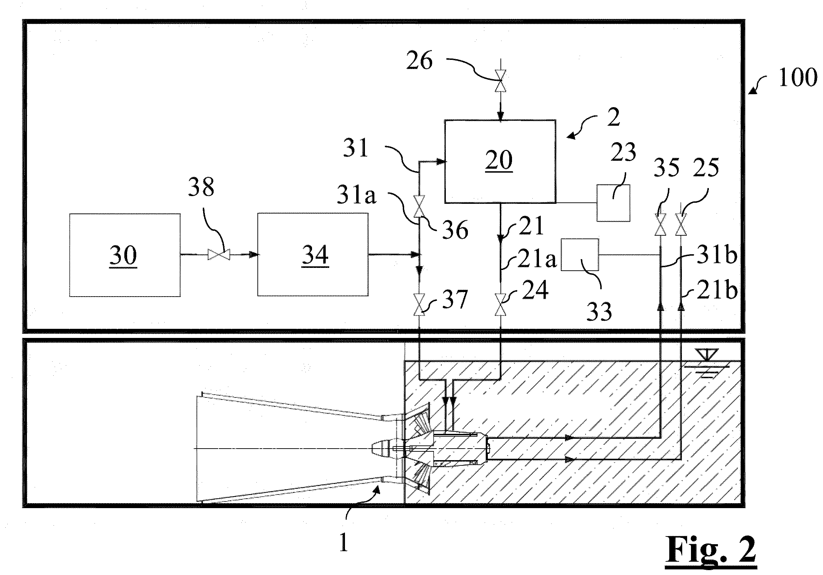

With reference to Figure 2, 100 denotes a plant for the production of hydroelectric energy in accordance with the present invention.

The plant 100 comprises a turbine unit 1 intended to be completely immersed in a flowing water channel.

The turbine unit 1 comprises, in a manner known per se, a fixed main body 13 which has an impeller 11 rotatably mounted thereon in a front position, namely upstream relative to the direction of flow of the water. A nose-piece 15 of the impeller 11 is keyed onto the front end of a shaft 12, having its axis substantially parallel to the direction of flow of the water. The rear portion of the shaft 12 carries the rotor of an alternator 10, or of a synchronous current generator, the body of which is housed inside a sealed chamber 32 formed in a rear portion of the main body.

The impeller 11 is obviously intended to intercept the flow of water which strikes it, starting to rotate and transmitting therefore the movement to the rotor of the alternator 10 and generating electric energy produced by the plant 1.

The shaft 12 is supported by a bearing 14 positioned between the nose-piece 15 and the sealed chamber 32 which houses the alternator 10 and defining internally a lubrication chamber 22 which is designed to be filled with lubricating liquid, in the case in question oil.

The plant 1 also comprises a lubrication circuit 2 intended to supply the lubrication chamber 22 with the oil necessary for correct lubrication of the bearing 14.

The lubrication circuit 2 comprises a storage reservoir 20 for the oil, of preferably cylindrical shape, provided with an oil inlet which is intercepted by a filling valve 26 which allows topping-up thereof and an outlet valve for supplying the said lubrication circuit.

The storage reservoir 20 also comprises an air inlet which is connected to a pressurization circuit 3 and allows the introduction of compressed air inside the reservoir.

Reference is also made to the presence, on the storage reservoir 20, of an inspection window or column - not shown in the present figures - which allows a visual assessment of the balance between the pressure of the compressed air and the oil inside the said reservoir.

The lubrication circuit also comprises a hydraulic supply line 21 which is defined in the present case by a pipe suitable for this purpose and allows distribution of the oil contained in the storage reservoir 20.

The hydraulic supply line 21 comprises in particular an upstream portion 21a, which connects the oil outlet of the storage reservoir 20 to the aforementioned lubrication chamber 22, and a downstream portion 21b, which connects instead the lubrication chamber 22 to a vent communicating with the exterior and suitably regulated by a bleed valve 25 which allows the pressure inside the lubrication chamber 22 to be kept uniform.

The upstream portion 21a of the hydraulic supply line 21 is intercepted by a lubrication chamber isolating valve 24 which allows the oil supply to said lubrication chamber to be interrupted.

The main function of the pressurization circuit 3 previously mentioned is to introduce compressed air at a sufficiently high pressure inside the sealed chamber 32 which isolates the alternator 10 from the external water head. Moreover, the pressurization circuit also keeps the lubrication circuit under pressure, being connected to the storage reservoir 20 by means of the aforementioned air inlet.

The pressurization circuit 3 comprises a compressor 30 to which a pneumatic pressure reducer 34 is connected in series. A compressor isolating valve 38 is inserted between the said two components and allows operations - for example for replacement or maintenance purposes - to be carried out on the compressor while keeping the pressurization circuit 3 under pressure.

The pneumatic pressure reducer 34 introduces compressed air into a pneumatic supply line 31 which in particular takes the form of specially designed pneumatic piping.

The pneumatic supply line 31 comprises an upstream portion 31a, in turn comprising a first branch and second branch which extend from the air outlet of the pneumatic pressure reducer 34. The first branch connects the compressor 30 to the sealed chamber 32; the second branch instead supplies the compressed air to the storage reservoir 20, via the air inlet of the latter.

The two aforementioned branches are both intercepted by isolating valves - i.e. a reservoir isolating valve 36 and sealed chamber isolating valve 37 - which allow either chamber to be excluded from the pressurization circuit 3.

The pneumatic supply line 31 further comprises a downstream portion 31b, which connects the sealed chamber 32 to a vent communicating with the exterior and suitably regulated by a bleed valve 35 which allows the pressure inside the sealed chamber 32 to be kept uniform and also the presence of compressed air inside the pressurization circuit 3 to be checked.

It should be noted that all the valves described above take the form in particular of manually operated gate valves.

In addition to the aforementioned visual inspection column formed on the storage reservoir, the plant has two sensors designed to detect an imbalance condition due to leakages and/or infiltration: a minimum pressure sensor 33, intended to detect a drop in the pressure below a given threshold and operating on the downstream portion 31b of the pneumatic supply line 31; and a minimum-level sensor 23, intended to detect lowering of the oil level inside the storage reservoir 31 below a given threshold.

When starting operation of the plant described above, first of all the pressurization operations described below are carried out.

Firstly all the valves associated with the hydraulic circuit, namely the filling valve 26, the lubrication chamber isolating valve 24 and the bleed valve 25 are opened.

When the oil starts to flow out of the bleed valve 25, the lubrication chamber 22 is full; the bleed valve 25 is then closed together with the filling valve 26.

The reservoir isolating valve 36 is then closed, while leaving open the other valves of the pneumatic circuit, namely the sealed chamber isolating valve 37, the compressor isolating valve 38 and the bleed valve 35. The compressor 30 is then started up. Air is allowed be discharged from the bleed valve 35, before the latter is closed and the system pressurized. When the control manometer - or the minimum pressure sensor 33 - indicates that the system is under pressure, the reservoir isolating valve 36 is opened again so as to obtain a balance between the two fluids present inside the storage reservoir 20.

Monitoring of the plant 1 is performed by means of the two aforementioned sensors which detect critical conditions due to a seepage of liquid inside the sealed chamber 32 and/or an oil leakage into the water. In particular, the sensors may transmit an alarm signal to a control unit - not shown - which manages the plant.

During lowering of the pressure in the pneumatic circuit, detected by the minimum pressure sensor 33, a first measure implemented by the control unit may be the activation of the compressor 30; if, however, a pressure balance is not reached, the plant 1 is switched off, stopping the turbine.

In the case of a reduction of the oil level in the storage reservoir 20, detected by the minimum level sensor 23, the turbine is immediately stopped.

The inspection column on the storage reservoir may allow operating personnel to check the validity of the alarm signal activated by one of the sensors, confirming the operating malfunction by means of a visual inspection.

Obviously, a person skilled in the art, in order to satisfy any specific requirements which arise, may make numerous modifications and variations to the plant and the method described above, all of which being moreover contained within the scope of protection of the invention, as defined by the following claims.

## Claims

1. Plant (100) for the production of hydroelectric energy, comprising:
- a turbine unit (1), designed to operate fully immersed in flowing water, comprising in turn a current generator (10) and an impeller (11) connected thereto by means of a shaft (12), said shaft (12) being rotatably coupled to a main body (13) of the turbine unit (1) by means of at least one bearing (14);
- a lubrication circuit (2), comprising a storage reservoir (20) for a lubricating fluid and a hydraulic supply line (21) which establishes fluid connection between said storage reservoir (20) and a lubrication chamber (22) of said bearing (14); and
- a pressurization circuit (3);
**characterized in that** said pressurization circuit (3) comprises a compressed-fluid source and a pneumatic supply line (31) which connects said compressed-fluid source to a sealed chamber (32) which surrounds the current generator (10), isolating it from an environment outside the turbine unit (1), said pressurization circuit (3) being suitable to pressurize said sealed chamber (32) at a pressure greater than the hydrostatic pressure of the water in which the turbine unit (1) is immersed, said pneumatic supply line (31) further connecting said compressed-fluid source to said storage reservoir (20), so as to allow pressurization of the lubrication circuit (2).

2. Plant (100) according to Claim 1, wherein said pressurization circuit (30) comprises a minimum pressure sensor (33) intended to detect an excessive drop in pressure inside said pressurization circuit (30).

3. Plant (100) according to one of the preceding claims, wherein the lubrication circuit (2) comprises a minimum level sensor (23) associated with said storage reservoir (20) and intended to detect any leakages in the lubrication circuit (2).

4. Plant (100) according to Claim 2 and/or Claim 3, wherein said minimum pressure sensor (33) and/or said minimum level sensor (23) are operatively connected to a control unit designed to interrupt operation of the plant (100) in response to the signals of the said sensor/sensors (23; 33).

5. Plant (100) according to one of the preceding claims, wherein said storage reservoir (20) comprises a column which can be visually inspected in order to monitor the pressure balance between the compressed fluid and the lubricating liquid inside it.

6. Plant (100) according to one of the preceding claims, wherein the compressed-fluid source comprises a compressor (30) and a pneumatic pressure reducer (34) which is connected downstream of said compressor (30) and which supplies the pneumatic supply line (31).

7. Plant (100) according to one of the preceding claims, wherein said pneumatic supply line (31) comprises an upstream portion (31a), which connects said compressed-fluid source to said sealed chamber (32) and to said storage reservoir (20), and a downstream portion (31b), which connects said sealed chamber (32) to a bleed valve (35).

8. Plant (100) according to Claim 7, wherein said upstream portion (31a) of the pneumatic supply line (31) comprises a first branch, which connects the compressed-fluid source to the sealed chamber (32), and a second branch, which connects the compressed-fluid source to the storage reservoir (20), said branches being separately interruptible respectively by means of a reservoir isolating valve (36) and a sealed chamber isolating valve (37).

9. Plant (100) according to one of the preceding claims, wherein said pneumatic supply line (21) comprises an upstream portion (21a), which connects said storage chamber (20) to said lubrication chamber (22), and a downstream portion (21b), which connects said lubrication chamber (22) to a bleed valve (25).

10. Plant (100) according to Claim 9, wherein said upstream portion (21a) of the hydraulic supply line (21) is selectively interruptible by means of a lubrication chamber isolating valve (24).

11. Method for controlling a plant (100) for the production of hydroelectric energy comprising a turbine unit (1) operating completely immersed in flowing water, where the turbine unit (1) has a current generator (10) and an impeller (11) connected thereto by means of a shaft (12) supported by at least one bearing (14), said method comprising the steps of:
- filling, with lubricating liquid, a lubrication chamber (22) of said bearing (14), supplied by a lubrication circuit (2);
- pressurizing, by means of a pressurization circuit (3), a sealed chamber (32) which surrounds the current generator (10), isolating it from an environment outside the turbine unit (1), until a pressure greater than the hydrostatic pressure of the water in which the turbine unit (1) is immersed is reached;
- pressurizing said lubrication circuit (2), by establishing fluid communication between the pressurization circuit (3) and the lubrication circuit (2).

12. Method according to the preceding claim, wherein said lubrication circuit (2) comprises a storage reservoir (20) connected to the lubrication chamber (22) by means of a hydraulic supply line (21), said step of pressurizing the lubrication circuit (2) envisaging pressurizing the storage reservoir (20) by connecting it to the pressurization circuit (3).

13. Method according to Claim 12, wherein said method comprises a step of checking the level of the lubricating liquid inside the storage reservoir (20), interrupting operation of the plant (1) should said level drop below a predetermined threshold.

14. Method according to one of Claims 11 to 13, wherein said method comprises a step of checking the pressure of the compressed fluid inside the pressurization circuit (3), generating an alarm signal should said pressure drop below a predetermined threshold.

15. Method according to Claim 14, wherein said alarm signal causes activation of a compressor (30) connected upstream of the pressurization circuit (3) and thereafter, should the action of the compressor (30) not allow restoration of the pressure beyond the predetermined threshold, switching-off of the plant (1).

## Patentansprüche

1. Anlage (100) zur Erzeugung von Wasserkraftenergie, umfassend:
- eine Turbineneinheit (1), die ausgebildet ist, um vollständig in fließendes Wasser eingetaucht zu arbeiten, umfassend ihrerseits einen Stromgenerator (10) und einen damit über eine Welle (12) verbundenen Impeller (11), wobei die Welle (12) über mindestens ein Lager (14) drehbar an einen Hauptkörper (13) der Turbineneinheit (1) gekoppelt ist;
- einen Schmierkreislauf (2), der ein Speicherreservoir (20) für eine Schmierflüssigkeit und eine hydraulische Versorgungsleitung (21) umfasst, die eine Fluidverbindung zwischen dem Speicherreservoir (20) und einer Schmierkammer (22) des Lagers (14) herstellt; und
- einen Druckbeaufschlagungskreislauf (3);
**dadurch gekennzeichnet, dass** der Druckbeaufschlagungskreislauf (3) eine Druckfluidquelle und eine pneumatische Versorgungsleitung (31) umfasst, die die Druckfluidquelle mit einer abgedichteten Kammer (32) verbindet, die den Stromgenerator (10) umgibt und ihn von einer Umgebung außerhalb der Turbineneinheit (1) isoliert, wobei der Druckbeaufschlagungskreislauf (3) geeignet ist, die abgedichtete Kammer (32) mit einem Druck zu beaufschlagen, der größer als der hydrostatische Druck des Wassers ist, in das die Turbineneinheit (1) eingetaucht ist, wobei die Versorgungsleitung (31) ferner die Druckfluidquelle mit dem Speicherreservoir (20) verbindet, um eine Druckbeaufschlagung des Schmierkreislaufs (2) zu ermöglichen.

2. Anlage (100) nach Anspruch 1, wobei der Druckbeaufschlagungskreislauf (30) einen Minimaldrucksensor (33) umfasst, der bestimmt ist, einen übermäßigen Druckabfall innerhalb des Druckbeaufschlagungskreislaufs (30) zu erfassen.

3. Anlage (100) nach einem der vorhergehenden Ansprüche, wobei der Schmierkreislauf (2) einen dem Speicherreservoir (20) zugeordneten Minimalfüllstandssensor (23) umfasst, der bestimmt ist, eventuelle Undichtigkeiten im Schmierkreislauf (2) zu erfassen.

4. Anlage (100) nach Anspruch 2 und/oder Anspruch 3, wobei der Minimaldrucksensor (33) und/oder der Minimalfüllstandssensor (23) operativ mit einer Steuereinheit verbunden sind, die ausgebildet ist, den Betrieb der Anlage (100) als Reaktion auf die Signale des Sensors/der Sensoren (23; 33) zu unterbrechen.

5. Anlage (100) nach einem der vorhergehenden Ansprüche, wobei das Speicherreservoir (20) eine Säule umfasst, die visuell inspiziert werden kann, um das Druckgleichgewicht zwischen dem komprimierten Fluid und der darin befindlichen Schmierflüssigkeit zu überwachen.

6. Anlage (100) nach einem der vorhergehenden Ansprüche, wobei die Druckfluidquelle einen Verdichter (30) und einen pneumatischen Druckminderer (34) aufweist, der dem Kompressor (30) nachgeschaltet ist, und der die pneumatische Versorgungsleitung (31) versorgt.

7. Anlage (100) nach einem der vorhergehenden Ansprüche, wobei die pneumatische Versorgungsleitung (31) einen stromaufwärtigen Abschnitt (31a) aufweist, der die Druckfluidquelle mit der abgedichteten Kammer (32) und mit dem Speicherreservoir (20) verbindet, und mit einem stromabwärtigen Abschnitt (31b), der die abgedichtete Kammer (32) mit einem Entlüftungsventil (35) verbindet.

8. Anlage (100) nach Anspruch 7, wobei der stromaufwärtige Abschnitt (31a) der pneumatischen Versorgungsleitung (31) einen ersten Zweig aufweist, der die Druckfluidquelle mit der abgedichteten Kammer (32) verbindet, und einen zweiten Zweig, der die Druckfluidquelle mit dem Speicherreservoir (20) verbindet, wobei die Zweige jeweils mittels eines Speicherabsperrventils (36) und eines abgedichteten Kammer-Absperrventil (37) getrennt unterbrechbar sind.

9. Anlage (100) nach einem der vorhergehenden Ansprüche, wobei die pneumatische Versorgungsleitung (21) einen stromaufwärtigen Abschnitt (21a) umfasst, der die Speicherkammer (20) mit der Schmierkammer (22) verbindet, und einen stromabwärtigen Abschnitt (21b), der die Schmierkammer (22) mit einem Entlüftungsventil (25) verbindet.

10. Anlage (100) nach Anspruch 9, wobei der stromaufwärtige Abschnitt (21a) der hydraulischen Versorgungsleitung (21) selektiv mittels eines Schmierkammer-Absperrventils (24) unterbrechbar ist.

11. Verfahren zur Steuerung einer Anlage (100) zur Erzeugung von Wasserkraftenergie mit einer vollständig in fließendem Wasser eingetaucht arbeitenden Turbineneinheit (1), wobei die Turbineneinheit (1) einen Stromgenerator (10) und einen Impeller (11) aufweist, der damit über eine Welle (12) verbunden ist, die von mindestens einem Lager (14) getragen wird, wobei das Verfahren die folgenden Schritte umfasst:
- Füllen einer Schmierkammer (22) des Lagers (14) mit Schmierflüssigkeit, bereitgestellt durch einen Schmierkreis (2);
- Druckbeaufschlagung einer abgedichteten Kammer (32), die den Stromgenerator (10) umgibt und ihn von einer Umgebung außerhalb der Turbineneinheit (1) isoliert, mittels eines Druckbeaufschlagungskeislaufs (3), bis ein Druck größer als der hydrostatische Druck des Wassers, in das die Turbineneinheit (1) eingetaucht ist, erreicht wird;
- Druckbeaufschlagung des Schmierkreislaufs (2) durch Herstellen einer Fluidverbindung zwischen dem Druckbeaufschlagungskreislauf (3) und dem Schmierkreislauf (2).

12. Verfahren nach dem vorhergehenden Anspruch, wobei der Schmierkreislauf (2) ein Speicherreservoir (20) aufweist, das mit der Schmierkammer (22) über eine hydraulische Versorgungsleitung (21) verbunden ist, wobei der Schritt der Druckbeaufschlagung des Schmierkreislaufs (2) vorsieht, das Speicherreservoir (20) mit Druck zu beaufschlagen, indem es an den Druckbeaufschlagungskreislauf (3) angeschlossen wird.

13. Verfahren nach Anspruch 12, wobei das Verfahren einen Schritt des Überprüfens des Pegels der Schmierflüssigkeit innerhalb des Speicherreservoirs (20) umfasst, wobei der Betrieb der Anlage (1) unterbrochen wird, wenn der Pegel unter einen vorbestimmten Schwellwert fällt.

14. Verfahren nach einem der Ansprüche 11 bis 13, wobei das Verfahren einen Schritt des Prüfens des Druckes des komprimierten Fluids innerhalb des Druckbeaufschlagungskreislaufs (3) umfasst, wobei ein Alarmsignal erzeugt wird, falls der Druck unter einen vorbestimmten Schwellwert fällt.

15. Verfahren nach Anspruch 14, wobei das Alarmsignal die Aktivierung eines Kompressors (30) bewirkt, der stromaufwärts des Druckbeaufschlagungskreislaufs (3) angeschlossen ist, und danach, falls die Aktion des Kompressors (30) die Wiederherstellung des Drucks jenseits des vorbestimmten Schwellenwerts nicht ermöglicht, die Anlage (1) abgeschaltet wird.

## Revendications

1. Installation (100) pour la production d'énergie hydroélectrique, comprenant :
- une unité (1) à turbine, conçue pour fonctionner en étant complètement immergée dans une eau en écoulement, comprenant un générateur de courant (10) et une roue (11) reliée à celui-ci au moyen d'un arbre (12), ledit arbre (12) étant relié de façon rotative à un corps principal (13) de l'unité (1) à turbine au moyen d'au moins un palier (14);
- un circuit de lubrification (2) comprenant un réservoir de stockage (20) pour un fluide de lubrification et une conduite d'alimentation hydraulique (21) qui établit une liaison fluidique entre ledit réservoir de stockage (20) et une chambre de lubrification (22) dudit roulement (14) et
- un circuit (3) de mise sous pression ;
**caractérisé en ce que** ledit circuit (3) de mise sous pression comprend une source de fluide comprimé et une conduite (31) d'alimentation pneumatique qui relie ladite source de fluide comprimé à une chambre étanche (32) qui entoure le générateur de courant (10), isolant celui-ci d'un environnement extérieur à l'unité (1) à turbine, ledit circuit (3) de mise sous pression étant apte à mettre sous pression ladite chambre étanche (32) selon une pression supérieure à la pression hydrostatique de l'eau dans laquelle est immergée l'unité (1) à turbine, ladite conduite (31) d'alimentation pneumatique reliant en outre ladite source de fluide comprimé audit réservoir de stockage (20), de manière à permettre la mise sous pression du circuit de lubrification (2).

2. Installation (100) selon la revendication 1, dans laquelle ledit circuit de mise sous pression (30) comprend un capteur de pression minimale (33) destiné à détecter une chute de pression excessive à l'intérieur dudit circuit de mise sous pression (30).

3. Installation (100) selon l'une des revendications précédentes, dans laquelle le circuit de lubrification (2) comprend un capteur de niveau minimal (23) associé audit réservoir de stockage (20) et destiné à détecter les éventuelles fuites dans le circuit de lubrification (2).

4. Installation (100) selon la revendication 2 et/ou la revendication 3, dans laquelle ledit capteur de pression minimale (33) et / ou ledit capteur de niveau minimal (23) sont connectés fonctionnellement à une unité de commande conçue pour interrompre le fonctionnement de l'installation (100) en réponse aux signaux desdits capteurs / capteurs (23 ; 33).

5. Installation (100) selon l'une des revendications précédentes, dans laquelle ledit réservoir de stockage (20) comprend une colonne qui peut être inspectée visuellement afin de surveiller l'équilibre de pression entre le fluide comprimé et le liquide lubrifiant à l'intérieur de celle-ci.

6. Installation (100) selon l'une des revendications précédentes, dans laquelle la source de fluide comprimé comprend un compresseur (30) et un réducteur de pression pneumatique (34) qui est connecté en aval dudit compresseur (30) et qui alimente la conduite d'alimentation pneumatique (31).

7. Installation (100) selon l'une des revendications précédentes, dans laquelle ladite conduite (31) d'alimentation pneumatique comprend une partie amont (31a), qui relie ladite source de fluide comprimé à ladite chambre étanche (32) et audit réservoir de stockage (20), et une partie aval (31b), qui relie ladite chambre étanche (32) à une soupape de purge (35).

8. Installation (100) selon la revendication 7, dans laquelle ladite partie amont (31a) de la conduite (31) d'alimentation pneumatique comprend une première branche, qui relie la source de fluide comprimé à la chambre étanche (32), et une deuxième branche, qui relie la source de fluide comprimé au réservoir de stockage (20), lesdites branches étant interruptibles séparément respectivement au moyen d'une vanne (36) d'isolement du réservoir et d'une vanne (37) d'isolement de la chambre étanche.

9. Installation (100) selon l'une des revendications précédentes, dans laquelle ladite conduite d'alimentation pneumatique (21) comprend une partie amont (21a), qui relie ladite chambre de stockage (20) à ladite chambre de lubrification (22), et une partie (21b) qui relie ladite chambre de lubrification (22) à une soupape de purge (25).

10. Installation (100) selon la revendication 9, dans laquelle ladite partie amont (21a) de la conduite d'alimentation hydraulique (21) est sélectivement interruptible au moyen d'une vanne (24) d'isolement de la chambre de lubrification.

11. Procédé de commande d'une installation (100) de production d'énergie hydroélectrique comprenant une unité (1) à turbine fonctionnant en étant complètement immergée dans de l'eau en écoulement, l'unité (1) à turbine comportant un générateur de courant (10) et une roue (11) relié à celui-ci au moyen d'un arbre (12) supporté par au moins un palier (14), ledit procédé comprenant les étapes consistant à :
- remplir, avec du liquide de lubrification, une chambre de lubrification (22) dudit palier (14), alimentée par un circuit de lubrification (2) ;
- mettre sous pression, au moyen d'un circuit (3) de mise sous pression, une chambre étanche (32) qui entoure le générateur de courant (10), isolant celui-ci par rapport à un environnement extérieur à l'unité (1) à turbine, jusqu'à ce que soit atteinte une pression supérieure à la pression hydrostatique de l'eau dans laquelle est immergée l'unité (1) à turbine ;
- mise sous pression dudit circuit de lubrification (2), en établissant une communication fluidique entre le circuit (3) de mise sous pression et le circuit de lubrification (2).

12. Procédé selon la revendication précédente, dans lequel ledit circuit de lubrification (2) comprend un réservoir de stockage (20) relié à la chambre de lubrification (22) au moyen d'une conduite (21) d'alimentation hydraulique, ladite étape de mise sous pression du circuit de lubrification (2) prévoyant de mettre sous pression le réservoir de stockage (20) en le reliant au circuit (3) de mise sous pression.

13. Procédé selon la revendication 12, dans lequel ledit procédé comprend une étape de vérification du niveau du liquide lubrifiant à l'intérieur du réservoir de stockage (20), interrompant le fonctionnement de l'installation (1) si ledit niveau descend en dessous d'un seuil prédéterminé.

14. Procédé selon l'une des revendications 11 à 13, dans lequel ledit procédé comprend une étape de vérification de la pression du fluide comprimé à l'intérieur du circuit (3) de mise sous pression, générant un signal d'alarme dans le cas où ladite pression chuterait en dessous d'un seuil prédéterminé.

15. Procédé selon la revendication 14, dans lequel ledit signal d'alarme provoque l'activation d'un compresseur (30) connecté en amont du circuit (3) de mise sous pression et ensuite, si l'action du compresseur (30) ne permet pas de rétablir la pression au-delà du seuil prédéterminé, la mise hors fonctionnement de l'installation (1).
